# FASCICULE DE BREVET EUROPEEN

(11) **EP 0 837 537 B1**
(45) Date de publication et mention de la délivrance du brevet: **02.08.2006**
(21) Numéro de dépôt: 97402425.9
(22) Date de dépôt: 14.10.1997
(51) Int. Cl.: H02J 13/00

(54) **Dispositif de commande par télérupteur programmable**
Steuervorrichtung für einen programmierbaren ferngesteuerten Schalter
Control device for a programmable remote control interrupter

(30) Priorité: 15.10.1996 FR 9612566
(43) Date de publication de la demande: 22.04.1998
(73) Titulaire: Société A D E E, 21410 Pont de Pany (FR)
(72) Inventeur: Girard, François, 21000 Dijon (FR); Gauthier, Jean-Paul, 21000 Dijon (FR); Malet, Pascal, 21000 Dijon (FR); Pontiggia, Michael, 21000 Dijon (FR); Metral, Jean-Claude, 12700 Saint-Bernard (FR)
(74) Mandataire: Puiroux, Guy

(56) Documents cités:
- DE-A- 3 920 595
- US-A- 4 202 038
- US-A- 4 465 956

## Description

La présente invention concerne un dispositif de commande d'appareils électriques par télérupteur de type programmable.

On sait que les télérupteurs sont constitués de boîtiers, modulaires ou non, qui permettent, par l'intermédiaire d'un circuit électrique secondaire, de commander à partir de plusieurs localisations un contact de puissance pour la mise en route ou l'arrêt d'équipements électriques. Certains télérupteurs sont parfois complétés par des dispositifs qui leur permettent d'assurer des fonctions complémentaires. Tel est notamment le cas de minuteries qui permettent à ces télérupteurs d'assurer une fonction de temporisation.

Dans les appareils de ce type on notera que la sélection de différentes fonctions est assurée à partir de l'appareil télérupteur lui-même et non à partir de l'un des multiples organes qui assurent la commande de celui-ci. Il s'ensuit une complication notable au niveau de l'utilisateur, puisque celui-ci est contraint, pour sélectionner la fonction souhaitée, d'accéder au télérupteur lui-même, ce qui, outre le fait qu'un tel accès n'est pas toujours possible, représente une difficulté, spécialement dans les immeubles importants où les télérupteurs peuvent être très éloignés des différents organes de commande.

On connaît également des télérupteurs modulaires qui permettent, par exemple au moyen d'un registre à décalage, de commander la mise en oeuvre successive, dans un ordre préétabli, suivant plusieurs fonctions associées à des équipements électriques divers en actionnant l'un quelconque des organes de commande. Un système de télérupteur de ce type est connu par le brevet US-A-4.465.956. L'usage de tels dispositifs est particulièrement contraignant, dans la mesure où l'utilisateur qui souhaite commander la mise en oeuvre d'une fonction donnée, doit commander préalablement l'activation de toutes les autres fonctions intermédiaires prévues et les réactiver de nouveau dans l'autre sens s'il souhaite ensuite revenir à la position initiale.

La présente invention a pour but de proposer un dispositif de commande par télérupteur qui permette, à partir de l'un quelconque de ses organes de commande, de sélectionner et d'activer, ou désactiver, de façon directe une fonction spécifique déterminée du télérupteur.

La présente invention a ainsi pour objet un dispositif de commande par télérupteur destiné à assurer l'activation et la désactivation de dispositifs électriques suivant plusieurs fonctions de commande préétablies, à partir de différents organes de commande, caractérisé en ce que :
- chacun des organes de commande est constitué d'un contacteur électrique unique, apte à produire, sous la sollicitation de l'utilisateur, un train d'impulsions électriques,
- il comporte des moyens de comptage du nombre desdites impulsions électriques produites,
- lesdits moyens de comptage sont en relation avec des moyens de sélection et de commutation aptes, en fonction du nombre d'impulsions comptées, à sélectionner de façon directe, une fonction de commande qui est associée à ce nombre d'impulsions électriques.

Dans un mode de mise en oeuvre de l'invention le dispositif de commande comporte des moyens aptes à produire un nombre d'impulsions qui est fonction du temps pendant lequel l'utilisateur agit sur l'organe de commande. Dans une variante de l'invention les moyens de production des impulsions comprennent un générateur d'impulsions mettant en oeuvre les inversions de polarité du réseau électrique.

Dans un autre mode de mise en oeuvre de l'invention, les moyens de comptage sont tels que le nombre d'impulsions produites dépend du nombre de sollicitations de l'organe de commande faites par l'utilisateur.

Dans un mode de mise en oeuvre de l'invention, les organes de commande comportent un dispositif de signalisation associé et qui est en liaison, notamment par un bus, avec lesdits moyens de sélection afin d'afficher un signal désignant la fonction de commande sélectionnée. Les moyens de liaison peuvent être également constitués notamment d'un dispositif à courant porteur.

On décrira ci-après, à titre d'exemple non limitatif, une forme d'exécution de la présente invention, en référence au dessin annexé sur lequel :
La figure 1 est un dessin synoptique schématique d'un exemple de mise en oeuvre de l'invention.
Les figures 2a et 2b sont des variantes de mise en oeuvre de l'invention.

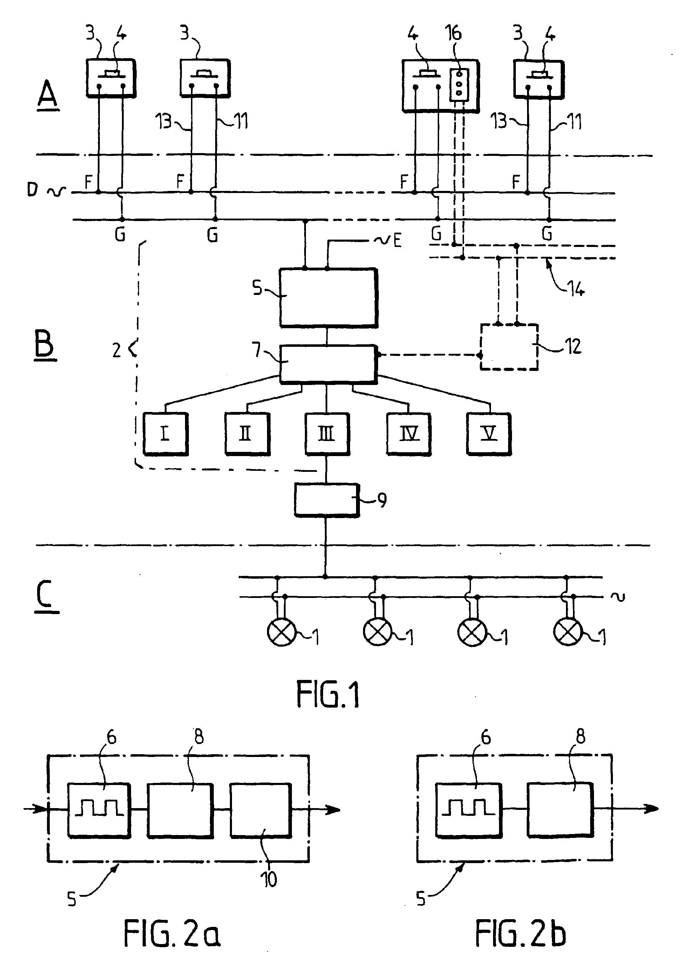

On a représenté sur la figure 1 une installation mettant en oeuvre un dispositif de commande par télérupteur suivant l'invention. Cette installation se distribue sur trois zones pouvant être éloignées les unes des autres, à savoir une zone A (par exemple un escalier et un sous-sol) où sont situés des contacteurs 3, une zone B (telle que par exemple un local technique comportant un tableau électrique) et une zone C (par exemple un garage) où sont disposées des lampes d'éclairage 1.

Les contacteurs 3 sont des contacteurs à poussoir de type classique qui, lorsque l'on enfonce leur bouton de commande 4, ferment le circuit électrique entre leurs bornes F et G. L'une des bornes, la borne F sur les dessins, de chaque contacteur 3 est reliée à l'un des fils d'alimentation D en courant électrique et l'autre borne G est reliée à une entrée H d'un circuit de commande de télérupteur 2.

Ce dernier est constitué d'un circuit de comptage d'impulsions 5, d'un circuit de sélection de fonction 7 et d'un télérupteur 9. Lorsque l'on active l'un des contacteurs 4, pendant un temps t donné, on envoie au circuit de comptage 5 un nombre n d'impulsions à la fréquence N du réseau électrique (50 Hz) soit 50 impulsions par seconde.

Comme représenté sur la figure 2a, le circuit de comptage 5 comprend un circuit 6 de mise en forme du signal qui transforme en signal carré la sinusoïde du réseau électrique, et un compteur 8 qui compte le nombre n d'impulsions émises et détermine, par un diviseur associé 10, le temps t pendant lequel l'utilisateur a maintenu enfoncé le bouton poussoir 4. Bien entendu, comme représenté sur la figure 2b, il n'est pas indispensable de prévoir un tel diviseur 10 et le dispositif peut également être conçu pour fonctionner à partir de données constituées par le nombre n d'impulsions mesurées par le circuit compteur 8.

Le circuit de comptage 5 est relié au circuit de sélection de fonction 7, de préférence un système de commutation programmé, qui est en mesure, en fonction de la durée d'actionnement t (ou du nombre d'impulsions n mesurées par le circuit de comptage 5), d'activer respectivement l'un des cinq moyens électroniques permettant de réaliser cinq fonctions de commande spécifiques, respectivement I, II, III, IV et V. Ces moyens sont reliés au télérupteur de commande 9, qui gère l'alimentation électrique des lampes 1.

Le circuit de comptage 5 et le circuit de sélection de fonction 7 peuvent bien entendu être réalisés à partir de composants discrets ou, de préférence, à partir de moyens logiciels stockés dans des moyens électroniques programmables tels que notamment des microcontrôleurs.

On décrira ci-après à titre d'exemple un mode de programmation des cinq fonctions I, II, III, IV et V dont les significations sont détaillées sur le tableau I ci-après.

Dans ces conditions, le fonctionnement du dispositif suivant l'invention s'établit comme décrit ci-après.

Lorsque l'utilisateur enfonce l'un quelconque des boutons poussoirs 4 il active le contacteur 3 qui lui est associé, ce qui déclenche du même coup la mise en route du circuit de comptage 5. Dès que l'utilisateur relâche le bouton poussoir 4 le comptage s'interrompt et la durée t de l'actionnement est envoyée au circuit de sélection de fonction 7.

**TABLEAU I**

| **Temps t mesuré ou** | **Nombre d'impulsions n** | **Fonction** |
|---|---|---|
| 0 à 0,1s | 0 à 5 | Aucune action |
| 0,1 à 3s | 5 à 150 | Fonction I : Télérupteur simple |
| 3s à 6s | 150 à 300 | Fonction II : Activation minuterie |
| 6s à 12s | 300 à 600 | Fonction III : Remise à zéro |
| 12s à 25s | 600 à 1250 | Fonction IV : Blocage minuterie |
| plus de 25s | plus de 1250 | Fonction V : Blocage télérupteur |

Celui-ci compare le temps t (ou le nombre d'impulsions n), à la table des fonctions résumée dans le tableau I précédent et, en fonction de la valeur mesurée, établit la commutation appropriée.

Afin d'éliminer aussi bien les rebonds mécaniques des contacteurs que les signaux parasites de ligne, toute action sur le poussoir 4 d'un contacteur 3 d'une durée inférieure à une durée seuil par exemple de 0,1s ne déclenche aucune fonction spécifique.

Si la durée t de l'actionnement mesurée par le circuit de comptage 5 est comprise entre 0,1s et 3s (soit 5 à 150 impulsions) le circuit de sélection de fonction 7 engage une fonction de télérupteur simple (fonction I), c'est-à-dire un fonctionnement classique de type bascule (ou interrupteur bistable), de sorte qu'une action sur un contacteur 3 met l'ensemble des lampes 3 dans une position (par exemple, allumage) et une nouvelle action identique ultérieure sur un contacteur 3 met l'ensemble des lampes 1 dans l'autre position (par exemple extinction).

Si la durée t de l'actionnement mesurée par le circuit de comptage 5 est comprise entre 3s et 6s (soit 150 à 300 impulsions) le circuit de sélection de fonction 7 engage une fonction d'activation de minuterie, (fonction II), c'est-à-dire qu'il contrôle l'allumage des lampes 1 pendant une durée prédéterminée T₁, par exemple préprogrammée dans le télérupteur 9. Pendant cet état, une action sur l'un quelconque des contacteurs 3 pendant un temps compris entre 0,1s et 3s aura pour effet d'interrompre la fonction minuterie et d'éteindre les lampes 1. Dans une variante de mise en oeuvre de l'invention, lorsque la durée T₁ allouée en fonction minuterie est proche de son expiration, des moyens de réduction de puissance sont automatiquement activés afin de réduire, par exemple de moitié, la puissance délivrée aux lampes 1 pendant le temps restant avant l'expiration de la durée T₁, ce qui a pour intérêt d'indiquer à l'utilisateur l'imminence de leur extinction, de façon à lui permettre, par exemple, de réenclencher le système pour un nouveau cycle de minuterie.

Si la durée t de l'actionnement mesurée par le circuit de comptage 5 est comprise entre 6s et 12s (soit 300 à 600 impulsions) le circuit de sélection de fonction 7 engage une fonction de remise à zéro de tous les télérupteurs 9 pilotés (fonction III).

Si la durée t de l'actionnement mesurée par le circuit de comptage 5 est comprise entre 12s et 25s (soit 600 à 1250 impulsions) le circuit de sélection de fonction 7 engage une fonction de blocage de la minuterie (fonction IV), ce qui permet à l'utilisateur de pouvoir conserver allumées les lampes 1 lorsqu'il souhaite réaliser une opération de longue durée. Un tel mode de mise en oeuvre est particulièrement intéressant en ce qu'il permet de commander le blocage et le déblocage de la minuterie à partir de l'un quelconque des contacteurs 3, alors que dans les dispositifs de l'état antérieur de le technique une telle commande ne peut être réalisée qu'à partir du télérupteur lui-même, ce qui impose habituellement à l'utilisateur d'avoir accès au tableau de l'installation ce qui, pour des raisons diverses liées notamment à la sécurité, n'est pas toujours envisageable.

Lorsque l'utilisateur aura terminé ladite opération de longue durée il aura la possibilité, à partir de l'un quelconque des contacteurs 3, de remettre le système dans son état initial en repassant par exemple en fonction activation minuterie (fonction II) ou en fonction télérupteur simple (fonction I).

Si la durée t de l'actionnement mesurée par le compteur 5 est supérieure à 25s (soit plus de 1250 impulsions) le circuit de sélection de fonction 7 engage une fonction de blocage du télérupteur 9 (fonction V), dans la position où il se trouve au moment de l'actionnement. Le déblocage ne peut ensuite être effectué que par une intervention sur le système.

Si le paramètre de mesure pris en compte par le circuit de sélection de fonction 7 peut être la durée t d'actionnement sur le poussoir 4, il peut également être le nombre n des impulsions qui sont générées lors de cet actionnement comme représenté sur le tableau I. Ce nombre d'impulsions peut être le nombre n des impulsions obtenues à partir de la fréquence de 50 Hertz du réseau électrique ou, dans le cas d'une alimentation redressée, un nombre d'impulsions N obtenues par action manuelle alternée de l'utilisateur sur le contacteur comme il sera indiqué plus loin.

Le dispositif de commande suivant l'invention présente l'avantage de pouvoir être mis en place dans une installation déjà existante sans modification filaire de celle-ci. En effet, on constate ainsi que représenté sur la figure 1 que la liaison par "deux fils" 11 et 13 entre les contacteurs 3 et la zone C est déjà en place dans toutes les installations existantes. Les seules modifications portent sur les éléments de la zone B, c'est-à-dire au niveau du tableau électrique, ce qui permet de passer de façon facile et sans travaux spécifiques, d'une installation de type classique à une installation suivant l'invention.

On peut également si on le souhaite adjoindre aux contacteurs 3 des moyens d'affichage de la fonction sélectionnée. On a figuré en pointillés sur la figure 1 une telle variante. Pour ce faire on a relié le circuit de sélection de fonction 7 à un bus 12 comportant une ligne de bus 14 à deux fils sur laquelle viennent se connecter des afficheurs 16 que l'on dispose dans les boîtiers des contacteurs 3. Une telle variante de mise en oeuvre implique bien entendu l'ajout à l'installation existante, de deux fils supplémentaires.

Bien entendu, on pourrait également utiliser les deux fils existants dans l'installation pour véhiculer des courants porteurs à fréquence différente, et notamment à fréquence plus élevée pour commander l'allumage de moyens de signalisation 16 de la fonction sélectionnée.

Comme mentionné précédemment on peut également suivant l'invention commander l'activation des différentes fonctions au moyen d'un train d'impulsions de courte durée généré directement par action manuelle alternée de l'utilisateur sur un contacteur 3. Dans un tel mode de mise en oeuvre le circuit de comptage 5 est du type représenté sur la figure 2b, si bien que l'on mesure alors le nombre d'actionnements N effectués par l'utilisateur sur un contacteur 3 pendant un temps maximal déterminé, de l'ordre par exemple de 6 secondes.

On a reproduit sur le tableau II ci-après la signification des différentes fonctions qui peuvent ainsi être mises en oeuvre.

**TABLEAU II**

| **Nombre d'impulsions N** | **Fonction** |
|---|---|
| 1 | Fonction I : Télérupteur simple |
| 2 | Fonction II : Activation minuterie |
| 3 | Fonction III: Remise à zéro |
| 4 | Fonction IV : Blocage minuterie |
| 5 | Fonction V : changement de temporisation de la minuterie |
| plus de 5 | Fonction VI : Blocage télérupteur |

On peut, comme représenté sur le tableau II, ajouter notamment une fonction de changement de temporisation de la minuterie qui permettrait à l'utilisateur de disposer de plusieurs périodes de fonctionnement de celle-ci.

La liste donnée dans les tableaux I et II des différentes fonctions sélectionnables, n'est pas exhaustive et l'on pourrait programmer d'autres types de fonctions sans sortir du cadre de l'invention.

La phase de comptage des impulsions émises pourra être précédée d'un signal d'initialisation qui pourra avantageusement être constitué, d'une impulsion de plus grande durée.

De même la fin de comptage des impulsions pourra être suivie par un signal de fin pouvant être constitué d'une impulsion plus longue.

## Revendications

1. Dispositif de commande par télérupteur (9) destiné à assurer l'activation et la désactivation de dispositifs électriques suivant plusieurs fonctions de commande préétablies, à partir de différents organes de commande (3), **caractérisé en ce que** :
- chacun des organes de commande (3) est constitué d'un contacteur électrique unique, apte à produire, sous la sollicitation de l'utilisateur, un train d'impulsions électriques (n,N),
- il comporte des moyens de comptage (5) du nombre (n,N) desdites impulsions électriques produites,
- lesdits moyens de comptage (5) sont en relation avec des moyens de sélection (7) et de commutation aptes, en fonction du nombre d'impulsions (n,N) comptées, à sélectionner de façon directe, une fonction de commande qui est associée à ce nombre d'impulsions électriques (n,N).

2. Dispositif suivant la revendication 1 **caractérisé en ce qu'**il comporte des moyens aptes à produire un nombre d'impulsions qui est fonction du temps pendant lequel l'utilisateur agit sur l'organe de commande (3).

3. Dispositif suivant la revendication 2 **caractérisé en ce que** les moyens de production des impulsions comprennent un générateur d'impulsions mettant en oeuvre les inversions de polarité du réseau électrique.

4. Dispositif suivant la revendication 1 **caractérisé en ce que** les moyens de comptage sont tels que le nombre des impulsions produites dépend du nombre (N) de sollicitations de l'organe de commande (3) faites par l'utilisateur.

5. Dispositif suivant l'une des revendications précédentes **caractérisé en ce que** les organes de commande comportent un dispositif de signalisation (16), qui est en liaison avec lesdits moyens de sélection (7) afin d'afficher un signal désignant la fonction de commande sélectionnée.

6. Dispositif suivant la revendication 5 **caractérisé en ce que** les moyens de liaison sont constitués d'un bus (12) et d'une ligne de bus (14).

7. Dispositif suivant la revendication 5 **caractérisé en ce que** les moyens de liaison sont constitués d'un dispositif dit à courant porteur.

## Claims

1. Remote switch control device (9) intended to ensure actuation and deactivation of electric devices in accordance with several predetermined control functions, using different control members (3), **characterized in that**:
- each of the control members (3) consists of a single electric contactor, able to produce a stream of electric pulses (n,N) at user demand,
- it comprises metering means (5) to count the number (n,N) of said electric pulses produced,
- said metering means (5) are linked to selection and switching means (7) which, in relation to the number of metered pulses (n,N), are able to directly select a control function which is associated with this number of electric pulses (n,N).

2. Device as in claim 1, **characterized in that** it comprises means able to produce a number of pulses in relation to the time during which the user acts on the control member (3).

3. Device as in claim 2, **characterized in that** the pulse producing means comprise a pulse generator using polarity inversions of the electric network.

4. Device as in claim 1, **characterized in that** the metering means are such that the number of pulses produced depends upon the number (N) of demands placed by the user on the control member (3).

5. Device as in any of the preceding claims **characterized in that** the control members comprise a signalling device (16), which is linked to said selection means (7) in order to display a signal designating the selected control function.

6. Device as in claim 5, **characterized in that** the link means consist of a bus (12) and a bus line (14).

7. Device as in claim 5, **characterized in that** the link means consist of a device called a carrier current device.

## Patentansprüche

1. Vorrichtung zur Bedienung mittels ferngesteuertem Schalter (9), dazu ausgebildet, die Aktivierung und die Deaktivierung von elektrischen Vorrichtungen gemäß mehreren vorbestimmten Bedienfunktionen zu gewährleisten, und zwar ausgehend von verschiedenen Bedienorganen (3), **dadurch gekennzeichnet, dass**:
- jedes der Bedienorgane (3) aus einem einzelnen elektrischen Kontaktgeber besteht, der geeignet ist, bei Betätigen durch den Benutzer, eine Serie von elektrischen Impulsen (n, N) zu erzeugen,
- sie Einrichtungen zum Zählen (5) der Anzahl (n, N) der erzeugten elektrischen Impulse aufweist,
- die Einrichtungen zum Zählen (5) in Beziehung mit den Einrichtungen zum Auswählen (7) und zum Umschalten stehen, die geeignet sind, in Funktion der Anzahl der gezählten Impulse (n, N) in direkter Weise eine Bedienfunktion auszuwählen, die dieser Anzahl von elektrischen Impulsen (n, N) zugehörig ist.

2. Vorrichtung nach Anspruch 1, **dadurch gekennzeichnet, dass** sie Einrichtungen aufweist, die geeignet sind, eine Anzahl von Impulsen zu erzeugen, die eine Funktion der Zeit ist, während der der Benutzer auf das Bedienorgan (3) einwirkt.

3. Vorrichtung nach Anspruch 2, **dadurch gekennzeichnet, dass** die Einrichtungen zur Erzeugung der Impulse einen Impulserzeuger aufweisen, der die Polaritätsumkehrungen des elektrischen Netzes nutzt.

4. Vorrichtung nach Anspruch 1, **dadurch gekennzeichnet, dass** die Einrichtungen zum Zählen derart sind, dass die Anzahl der erzeugten Impulse von der Anzahl (N) der durch den Benutzer vorgenommenen Betätigungsvorgänge des Bedienorgans (3) abhängt.

5. Vorrichtung nach einem der vorhergehenden Ansprüche, **dadurch gekennzeichnet, dass** die Bedienorgane eine Vorrichtung zur Signalisierung (16) aufweisen, die in Verbindung mit den Einrichtungen zur Auswahl (7) steht, um ein Signal anzuzeigen, das die ausgewählte Bedienfunktion bezeichnet.

6. Vorrichtung nach Anspruch 5, **dadurch gekennzeichnet, dass** die Verbindungseinrichtungen aus einem Bus (12) und einer Busleitung (14) bestehen.

7. Vorrichtung nach Anspruch 5, **dadurch gekennzeichnet, dass** die Verbindungseinrichtungen aus einer Einrichtung bestehen, die als Trägerstromeinrichtung bezeichnet wird.
